# EUROPEAN PATENT APPLICATION

(11) **EP 1 107 156 A2**
(43) Date of publication of application: **13.06.2001**
(21) Application number: 00310762.0
(22) Date of filing: 04.12.2000
(51) Int. Cl.: G06F 17/60

(54) **Method and product for associating information pertaining to a meter data acquisition system**

(30) Priority: 06.12.1999 US 455111
(71) Applicant: SIEMENS CORPORATE RESEARCH, INC., Princeton, New Jersey 08540 (US); Siemens Metering AG, 6310 Zug (CH)
(72) Inventor: Sherman, William, Belle Meade,NJ 08502 (US); La Roi, Hendrik C., 8001 Zuerich (CH); Paulish, Daniel J., Yardley,PA 19067 (US); Brusci, Paul J., Princetown Jct.,NJ 08550 (US); Greenberg, Michael, Pennington,NJ 08534 (US); Lukic, Slavisa, 6342 Steinhausen (CH)
(74) Representative: Wilding, Frances Ward

(57) **Abstract**

A method and product for associating information pertaining to a meter data acquisition system of a provider of one of a service and a product are provided. The method includes the step of receiving information corresponding to the provider, at least one parent entity that has at least one subordinate entity that receives one of the service and the product from the provider, and the at least one subordinate entity. A tree is formed that includes a root node (402), at least one branch node (404) emanating from the root node, and at least one leaf node (406) emanating from the at least one branch node. The root node corresponds to the provider, the at least one branch node corresponds to the at least one parent entity, and the at least one leaf node corresponds to the at least one subordinate entity. At least some of the received information corresponding to the provider, the at least one parent entity, and the at least one subordinate entity is associated with the root node, the at least one branch node, and the at least one leaf node, respectively. Actions relating to the providing of one of the service and the product are associated with each of the nodes based on the received information associated therewith.

## Description

The present invention relates generally to meter data acquisition systems and, in particular, to a method for associating information pertaining to a meter data acquisition system of a provider of a service or a product.

The automatic collection of meter readings is typically accomplished by means of data concentrators and communication mechanisms which are driven by a predefined schedule. This collected data is written into a database for long term storage and retrieval. Periodically it is necessary to compute a set of billing determinants based on the amount of energy consumed, the time of consumption, and the tariff rates in effect. The billing determinants are subsequently used to generate bills that are sent to the consumers for payment.

Conventional meter data acquisition central stations are based on the "bottom up" principle. This means that the low level device definitions are made first and the definitions of calculations, reports, and data transfer are made last. The automatic operation of the system is similarly done in a "bottom up" fashion. First the acquisition of data is done, then the calculation of billing determinants is done, finally followed by the transfer of the billing results to a billing system.

Each level of processing depends on the previous one. It is necessary to hand-code in the schedule the dependencies that the next action is not started before the previous action has been completed.

The "bottom-up" approach of conventional systems has numerous drawbacks. A description of some of these drawbacks will now be given.

Each scheduled process starts after its predecessor regardless of the success or failure of the previous process. This can result in the production of a report whose data had not been collected by the acquisition process. The details of the meter data include status information which should be examined and cross-checked with the set of processes and their error messages. This requires the user to have a tremendous amount of knowledge about the structure of the report and the conditions under which it can be properly produced. There is no support from conventional systems to help troubleshoot such problems.

At the end of a billing cycle there is a large amount of acquisition which delays the calculation of reports until all of the data has been collected. It would be desirable and highly advantageous if a report is able to execute as soon as its data is available.

The schedule is constructed by hand. This is a tedious and error prone task which requires a lot of detailed knowledge.

There is no concept of a "contract" in conventional systems. However, a contract is the basis for a customer's bill. The only point at which the meter readings and the customer information come together is in a report.

A significant amount of definition work is required to add a new meter or a new customer. There is no support by conventional systems to guarantee that all of the information has been entered or that what has been entered is correct.

It has traditionally been very difficult to get information from conventional systems, especially about customers and the associated reports.

Conventional systems have grown to approximately to what some consider to be approaching a practical upper limit. There is no possibility for it scale up by a significant amount.

Accordingly, it would be desirable and highly advantageous to have a method for associating information pertaining to a meter data acquisition system of a provider of a service or a product.

The invention is defined in the independent claims, to which reference should now be made. Further advantageous features are detailed in the dependent claims.

The present invention is directed to a method and a product for associating information pertaining to a meter data acquisition system of a provider of a service or a product.

According to preferred embodiments of one aspect of the present invention, there is provided a method for associating information pertaining to a meter data acquisition system of a provider of one of a service and a product. The method includes the step of receiving information corresponding to the provider, at least one parent entity (or master account) that has at least one subordinate entity (or consumer) that receives one of the service and the product from the provider, and the at least one subordinate entity. A hierarchical organisation such as a tree may be formed that includes a root node (also known as a top node), at least one branch node emanating from the root node, and at least one leaf node emanating from the at least one branch node. The root node corresponds to the provider, the at least one branch node corresponds to the at least one parent entity, and the at least one leaf node corresponds to the at least one subordinate entity. At least some of the received information corresponding to the provider, the at least one parent entity, and the at least one subordinate entity is preferably associated with the root node, the at least one branch node, and the at least one leaf node, respectively. Actions relating to the providing of one of the service and the product are preferably associated with each of the nodes based on the received information associated therewith.

According to an embodiment of a further aspect of the invention, there is provided a program storage device and/or a computer program equipped with means to carry out the method of the invention. Thus equivalent means may be provided also for any of the optional preferred method steps details in the following.

According to embodiments of the present invention, the method further includes the step of interconnecting some of the actions associated with any of the nodes to form a sequence of actions necessary to accomplish a given task.

According to preferred embodiments of the present invention, the method further includes the step of segmenting the tree into segments having at least one node therein, a unique identifier being assigned to each of the segments. At least one segment, if necessary, is associated with at least one user based on the identifier of the at least one segment. The at least one user is allowed access to only the at least one segment that the user is associated with (plus any segments that are defined as generally available to users).

These and other aspects, features and advantages of the present invention will become apparent from the following detailed description of preferred embodiments, which is to be read in connection with the accompanying drawings, in which:
FIG. 1 is a block diagram of a computer processing system to which the present invention may be applied according to an embodiment of the present invention;
FIG. 2 is a block diagram of a system for generating billing based on meter acquired data according to an illustrative embodiment of the present invention;
FIG. 3 is a diagram illustrating the relationship between data processing and control system of FIG. 2 and other, related systems, according to an illustrative embodiment of the present invention;
FIG. 4A is a block diagram of a consumer tree according to an illustrative embodiment of the present invention;
FIG. 4B is a flow diagram illustrating a method for associating information pertaining to a meter data acquisition system of a provider of a service or a product according to an illustrative embodiment of the present invention;
FIG. 4C is a flow diagram illustrating an alternate representation of the method of FIG. 4B;
FIG. 4D is a flow diagram of a method for segmenting a consumer tree to restrict access thereto according to an illustrative embodiment of the present invention;
FIG. 5 is a block diagram illustrating the container class hierarchy according to an illustrative embodiment of the present invention;
FIG. 6 is a block diagram illustrating the active element class hierarchy according to an illustrative embodiment of the present invention;
FIG. 7 is a block diagram summarily illustrating relationships between some of the elements (objects) of the present invention according to an illustrative embodiment thereof;
FIG. 8 is a diagram illustrating the interconnection of active elements according to an illustrative embodiment of the present invention;
FIG. 9 is a diagram illustrating the interconnection of active elements according to another illustrative embodiment of the present invention;
FIG. 10 is a block diagram illustrating an execution triggered by a scheduled event according to an illustrative embodiment of the present invention;
FIG. 11 is a diagram illustrating the execution of an active element according to an illustrative embodiment of the present invention;
FIG. 12 is a block diagram illustrating the relation between a mapping object and a spread sheet calculation according to an illustrative embodiment of the present invention;
FIG. 13 is a block diagram of an active element template according to an illustrative embodiment of the present invention; and
FIG. 14 is a diagram illustrating how the execution of a report may be triggered immediately after the data from a meter has been acquired according to an illustrative embodiment of the present invention.

The present invention is directed to a method for associating information pertaining to a meter data acquisition system of a provider of a service or a product.

To facilitate a clear understanding of the present invention, the following description and accompanying illustrative examples are directed to implementations employing object-oriented programming (OOP). However, it is to be appreciated that the present invention is not limited to object-oriented programming and, thus, other types of programming languages may be used within the scope of the present invention.

It is to be understood that the present invention may be implemented in various forms of hardware, software, firmware, special purpose processors, or a combination thereof. Preferably, the present invention is implemented in software as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof) which is executed via the operating system. In addition, various other peripheral devices may be connected to the computer platform such as an additional data storage device and a printing device.

It is to be further understood that, because some of the constituent system components and method steps depicted in the accompanying Figures are preferably implemented in software, the actual connections between the system components (or the process steps) may differ depending upon the manner in which the present invention is programmed. Moreover, because some of the constituent system components and method steps depicted in the accompanying Figures may be implemented in both hardware and software, items bearing the same reference numeral may be referred to in manner indicative of both hardware and software. Given the teachings of the invention provided herein, one of ordinary skill in the related art will be able to contemplate these and similar implementations or configurations of the present invention.

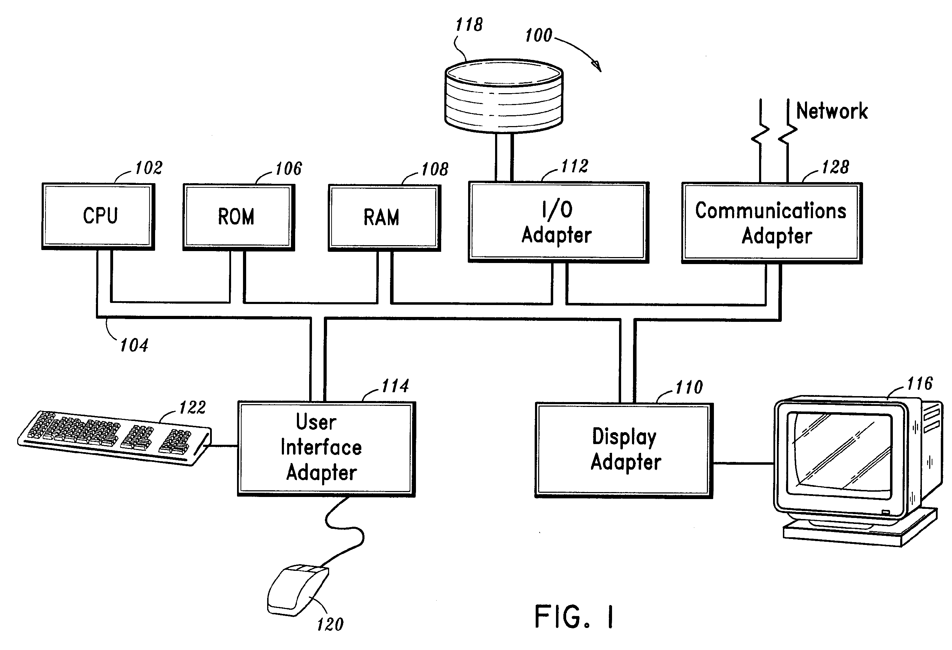

**FIG. 1** is a block diagram of a computer processing system 100 to which the present invention may be applied according to an embodiment of the present invention. The system 100 includes at least one processor (CPU) 102 operatively coupled to other components via a system bus 104. A read only memory (ROM) 106, a random access memory (RAM) 108, a display adapter 110, an I/O adapter 112, and a user interface adapter 114 are operatively coupled to system bus 104.

A display device 116 is operatively coupled to system bus 104 by display adapter 110. A disk storage device (e.g., a magnetic or optical disk storage device) 118 is operatively couple to system bus 104 by I/O adapter 112.

A mouse 120 and keyboard 122 are operatively coupled to system bus 104 by user interface adapter 114. The mouse 120 and keyboard 122 may be used to input and output information to and from system 100. The system 100 also includes a communications adapter 128 operatively coupled to system bus 104 for facilitating communication with a remote network.

In a preferred embodiment, the present invention is implemented on at least one server, which is accessible by one or more user terminals. In such a case, some of the above-identified elements may not be necessary on the server side and, thus, may not be employed (e.g., display, mouse, keyboard). Moreover, in the preferred embodiment, the server(s) is coupled to the Internet, thereby allowing convenient, global access to the information and abilities embodied therein. However, it is to be appreciated that the present invention may be employed in any network environment, such as, for example, an intranet. Moreover, in a more simple form, the present invention may be implemented on a single computer processing system, with access to external, required data (e.g., meter data) being provided manually (disk) or through a communication medium (e.g., telephone line, Integrated Services Digital network (ISDN), fiber optic line, infra red, and so forth). Given the teachings of the invention provided herein, one of ordinary skill in the related art will be able to contemplate these and similar implementations of the elements of the present invention.

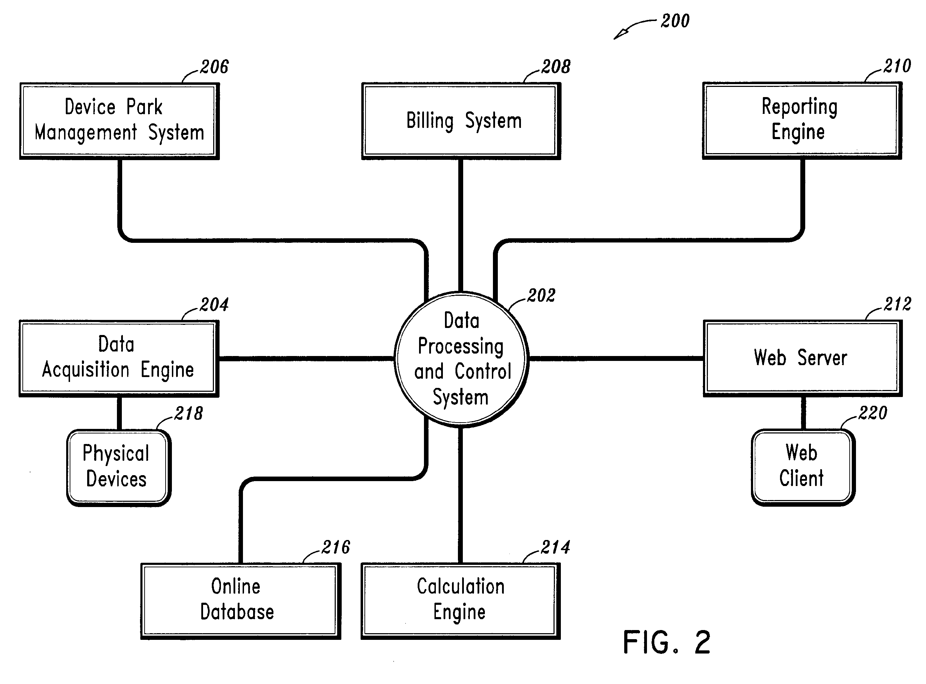

**FIG. 2** is a block diagram of a system 200 for generating billing based on meter acquired data according to an illustrative embodiment of the present invention. System 200 includes the following elements: a data processing and control system 202; a data acquisition engine 204; a device park management (DPM) system 206; a billing system 208; a reporting engine 210; a web server 212; a calculation engine 214; and an online database 216.

Data processing and control system 202 produces billing determinants for the billing system 208 and generates billing reports. Data processing and control system 202 also provides the mechanisms for coordinating the activities of all the other systems connected thereto.

Data acquisition engine 204 acquires energy consumption data by communicating with physical devices 218 such as, for example, meters and data concentrators (not shown) .

Device park management (DPM) system 206 is an inventory store of all the equipment owned by an energy supplier. DPM system 206 stores device characteristics (serial number, device type, manufacturer, and so forth) together with installation specific data (consumer, device location, and so forth). DPM system 206 is an optional element of system 200 and, thus, may be omitted if so desired,

Billing system 208 generates a consumer bill based on the billing determinants that have been computed by data processing and control system 202. Billing system 208 is an optional element of system 200 and, thus, may be omitted if so desired.

Reporting engine 210 may be used to format reports. In some cases, reporting engine 210 may also be used to generate the reports. In a preferred embodiment of the present invention, reporting engine 210 is implemented by a reporting program (software) such as, for example, CRYSTAL REPORTS. However, it is to be appreciated that the present invention is not limited to the use of CRYSTAL REPORTS and, thus, any reporting program may be employed within the scope of the present invention.

Calculation engine 214 is used for the definition and execution of calculations and reports. In a preferred embodiment of the present invention, calculation engine 214 is implemented by a spread sheet program (SSP) such as, for example, EXCEL. However, it is to be appreciated that the present invention is not limited to the use of a spread sheet program and, thus, any calculation engine may be employed within the scope of the present invention.

Web server 212 drives the web-based user interface, for interfacing with a web client 220. It is to be appreciated that web server 212 corresponds to a preferred embodiment of system 200 and, thus may be replaced by any other type of user interface. Online database 216 is the primary data repository for acquired meter data and all of the consumer and processing information. It is to be appreciated that implementations of database 216 will vary depending on the user interface employed.

The three main functions of system 200 are data acquisition, data processing and reporting. Accordingly, a brief description of these three functions will now be given.

Data acquisition is the collection of meter readings and the storage of this data in a database (i.e., online database 216). All communication to physical devices 218 is handled via predefined protocols in data acquisition engine 204. The data acquisition process is driven by a predefined schedule.

Computation engine 214 performs a significant portion of data processing. Computations performed by computation engine 214 include load profile calculations, creation of billing determinants, meter check functions, plausibility checks, and so forth.
The results of a computation may be used as input by a report.

System 200 provides a general approach to customization at different installations. This is accomplished by defining and adding reports and calculations. That is, system 200 is configured such that a third party tool(s) may be used to define the reports (e.g., CRYSTAL REPORTS) and calculations (e.g., EXCEL).

Any operation that generates output (e.g., graphical user interface (GUI), export file, printed report, billing system) is referred to as a report. When possible, the report writing capabilities of computation engine 214 will be used. Otherwise, reporting engine 210 will be used. The data processing and reporting operations are driven by a schedule.

As used herein, a consumer tree (CT) refers to the primary organizing structure of objects within data processing and control system 202. A description of the consumer tree according to an illustrative embodiment of the present invention will now be given.

The consumer tree provides a natural hierarchical organization of company, master accounts, and consumer accounts. Moreover, the consumer tree facilitates accessing data among different nodes and this structure (tree structure) is reflected in the user interface.

The consumer tree consists of a top-level node, any number of intermediate (i.e., branch) nodes, and any number of leaf nodes. The top-level node represents a company providing a service and/or utility (e.g., electric, water, and so forth). The intermediate nodes represent master accounts and the leaf nodes represent consumer accounts. The master accounts correspond to parent organizations that receive the service and/or utility from the company. The consumer accounts correspond to subordinate organizations that receive the service and/or utility from the company and that are subordinate with respect to at least one of the parent organizations. Thus, for example, a master account may correspond to the parent organization MCDONALDS, while corresponding consumer accounts may correspond to the individual MCDONALDS franchisees. It is to be appreciated that a given parent organization corresponding to a given master account need not actually receive the service or utility from the company. In such a case, however, at least one subordinate organization of the given parent organization should receive the service or utility from the company.

The organizational structure of the consumer tree makes it easy to combine two companies or subdivide a company into multiple companies. The top node can become a master account in an existing tree and any master account can be spun off to create an independent consumer tree. Such a flexible arrangement lends itself to an environment of deregulation of the utility industry, where small companies may be bought up and combined into a single company.

In the consumer tree, the top (or root) node is treated in a "special" way and is only accessible by an individual with the appropriate access rights. It is to be noted that, initially, the consumer tree simply consists of the top node.

There are two kinds of elements (objects) in the consumer tree, i.e., container elements and active elements. Container elements correspond to, for example, the top node, master accounts, consumer accounts, and contracts. Active elements correspond to, for example, calculations, reports, meter proxies, tariff agreements, auxiliary (AUX) values, backup, archive, and meter operations.

In a preferred embodiment of the present invention, templates are employed. Ease of creating, for example, new consumer accounts, master accounts, active elements, contracts, and so forth, is one benefit of using a library of standard templates. For example, a contract can be added to a consumer account by simply selecting the appropriate contract template and providing the relevant meter ID. This will result in a ready-to-run contract whose meter data is acquired, and whose reports are generated, at the appropriate times.

In an optimized embodiment of the present invention where templates are used, changes may be made to many elements at once by modifying the template corresponding to those elements. That is, when a template is modified, every element that was created based on that template will reflect the changes, unless the data fields have been overwritten in the instance. It is to be appreciated that this capability may or may not be enabled when templates are used.

A "mapping object" describes how data is transferred between the elements in the consumer tree. The use of a "mapping definition" specification allows the writer of a template to concentrate on what the calculation or report should do, not on how to get the data for a particular instance and timeframe.

In a preferred embodiment of the present invention, containers and active elements are versioned. This enables the examination of elements and the creation of reports from past data.

A description of the operation (execution) of system 200 according to an illustrative embodiment of the present invention will now be given. An important capability of system 200 is the automatic generation of a daily schedule from the set of scheduled events in the consumer tree. Container elements have a list of scheduled events for their active elements. These scheduled events are collected and used by a "schedule maker" as the basis for constructing the daily schedule.

Each day, an acquisition list is developed and optimized and added to the daily schedule. The reports and other operations to be performed are also added to the daily schedule.

When acquisition jobs are run, a "progress monitor" keeps track of which acquisitions have been completed and their status. The progress monitor maintains a table that is used for recovery in the event of a system crash. Failed acquisitions are gathered into a list for manual acquisition or used as input to the next day's schedule (retry).

The execution of a report or calculation requires the interpretation of the mapping descriptions of the input mapping object. The appropriate data is retrieved and made available for use by calculation engine 214 or report engine 210. When a report or calculation requires the output results of an earlier calculation, that earlier calculation must be executed. The concept of a "calculation chain" arises from the interconnections between active elements (e.g., meter proxies, calculations, reports, and so forth). This results in a "dependency-driven" system that is initially decoupled from the acquisition of data.

Normally, reports are scheduled to be executed at predetermined times. However, it is also possible to interactively request a report or calculation to be generated at any time. This will result in the request for runtime input parameters from the user.

A description of a web-based user interface according to an illustrative embodiment of the present invention will now be given. In the illustrative embodiment, the web-based user interface uses ACTIVE SERVER PAGE technology for the construction of web pages and the processing of forms. However, it is to be appreciated that the present invention is not limited to the use of ACTIVE SERVER PAGE technology and, thus, other server technologies may be used. Moreover, it is to be further appreciated that other (non-server) technologies may be used depending on the particular implementation of the user interface. With respect to the illustrative embodiment, the web-based user interface is event driven, triggered by user actions. A client-server paradigm is used.

Logon is required to access the web pages. The users should supply their name and password to have an authorized session. Users are afforded various permissions by virtue of their membership in one or more "access groups".
Web pages are constructed for each user based on their access privileges. It will not be possible for a user to perform system functions without the appropriate permission. If necessary, a secure communication protocol such as, for example, SECURE SOCKET LAYER (SSL) could be used to ensure privacy. It is to be appreciated that the present invention is not limited to the use of SSL and, thus, other means for ensuring privacy may be used.

In a preferred embodiment of the present invention, there are two general classes of users, i.e., consumers and privileged users. Consumers (e.g., consumer accounts, master accounts) have an account identification (ID) number and a personal identification number (PIN). These users are restricted to viewing their own information. Master accounts may view the information of the consumer accounts below them. Privileged users have a name and a password. Privileged users have a set of access rights by virtue of membership in access groups.

It is to be appreciated that system 200 is configured in such a way that adding more processors can scale it up. This is accomplished by the appropriate use of distributed system technology including, but not limited to, DISTRIBUTED COM (DCOM), MICROSOFT (MS) TRANSACTION SERVER, and MICROSOFT (MS) MESSAGE QUEUE. In a distributed system, the processing tasks are distributed among all available processors. This allows the system to scale up for handling large numbers of simultaneous acquisitions and reports.

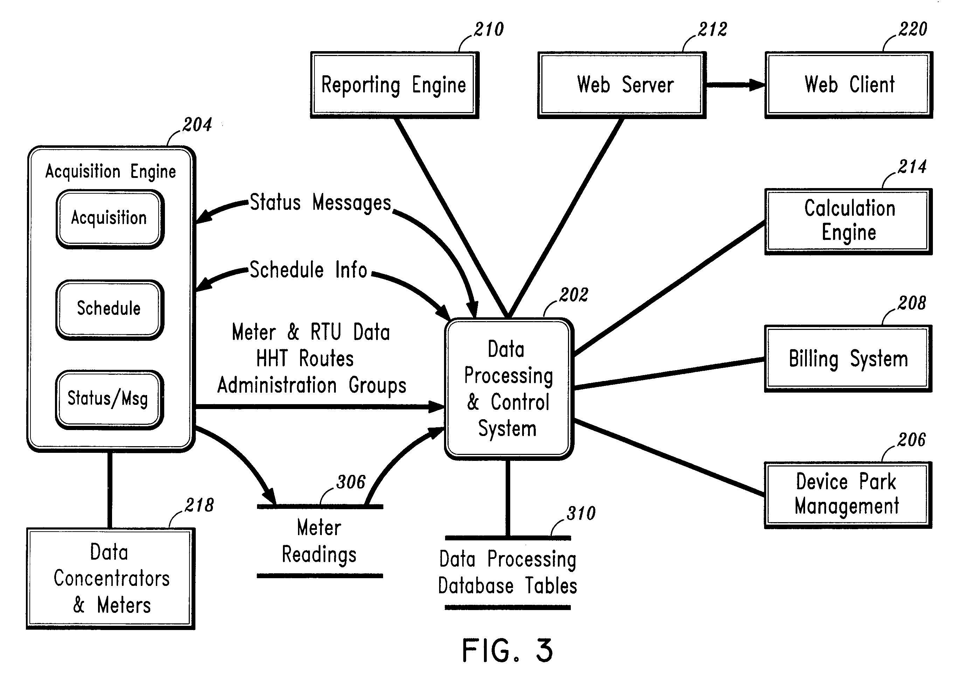

**FIG. 3** is a diagram illustrating the relationship between data processing and control system 202 of FIG. 2 and other, related systems, according to an illustrative embodiment of the present invention. FIG. 3 is similar to FIG. 2 with respect to the elements shown (except for the omission of online database 216). However, FIG. 3 provides additional detail with respect to some of the elements of system 200 shown in FIG. 2.

For example, acquisition engine 204 exchanges status messages with data processing and control system 202. Moreover, acquisition engine 204 receives schedule information from data processing and control system 202. Further, acquisition engine 204 provides data processing and control system 202 with meter and Remote Terminal Unit (RTU) data, Hand Held Terminal (HHT) routes, and administration groups. Meter readings 306 are also provided to data processing and control system 202 from acquisition engine 204. In performing its functions, data processing and control system 202 refers to data processing and database tables 310

A further description of the consumer tree according to an illustrative embodiment of the present invention will now be given. Some of the purposes of the Consumer Tree (CT) include the following:
(1) Provide a hierarchical organization of companies, master accounts, and customers.
(2) Represent contracts.
(3) Allow the specification of regularly scheduled events.
(4) Unify functionality common to companies, master accounts, customers, and contracts.
(5) Facilitate the sharing of various types of data (e.g., meter proxy and AUX values) between contracts, customers, and so forth.
(6) Support definitions of computations and reports.
(7) Support different models of protection and error detection (e.g., Customer A should not have access to the data of customer B).
(8) Allow actions that span multiple contracts, customers, master accounts, and so forth.
(9) Simplify the GUI by providing a natural organization of consumers, contracts, meter proxies, reports, AUX values, and so forth.
(10) Support templates and instantiation.
(11) Provide the "history" of various elements in the tree.
(12) Enable data segmentation.

As stated above, there are two types of elements (objects) in the consumer tree (CT), i.e., containers and active elements. Containers have attributes (e.g., a name) and contain a set of active elements and scheduled events (stored in a "workset"). Containers are used to organize information. Contracts and consumers are examples of containers.

Active elements are objects in the CT containing significant functionality. Active elements also have attributes. Reports, meter proxies, and acquisition tasks are examples of active elements.

Templates can be made for both containers and active elements. Moreover, both element types may be fully versioned. Templates and versioning are described in further detail hereinbelow.

Worksets contain sets of active elements and scheduled events. By definition, any object containing a workset is a container.

There are three types of nodes within the consumer tree, i.e., a top node, a master account, and a consumer. Any of these nodes may be generally referred to as a "ConsumerTreeNode" (CTN).

The top node corresponds to the root node of the consumer tree, and describes functions relating to the entire installation. The master account describes functions relating to groups of consumers. The consumer describes functions relating to an individual consumer.

Associated with each type of node are its children, a single workset, and a set of contracts. Contracts also contain a single workset. Contracts are described in further detail hereinbelow.

Worksets associated with a CTN define actions spanning multiple consumers and/or multiple contracts. Worksets associated with a contract define actions pertaining to a single contract.

Nodes in the consumer tree (and contracts) are containers. Containers are described in further detail hereinbelow.

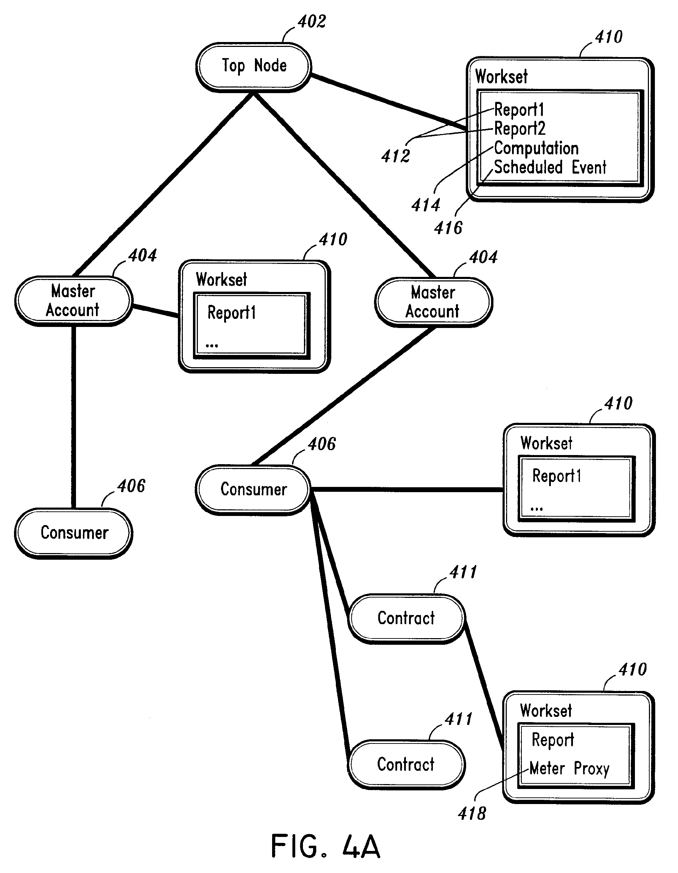

**FIG. 4A** is a block diagram of a consumer tree according to an illustrative embodiment of the present invention. The structure of the consumer tree requires that the root node be of the type top node 402. The children of the top node are either master accounts 404 or consumers 406. The children of master accounts are either other master accounts or consumers. Consumer nodes are leaf nodes.

Each of the nodes of the consumer tree may be associated with a workset(s) 410 and/or a contract(s) 411. A workset may contain or be associated with reports 412, computations 414, scheduled events 416, meter proxies 418, and so forth. Worksets and the elements contained therein are described in further detail hereinbelow.

It is to be appreciated that the present invention (in particular, the consumer tree) is not limited to the particular nodes and node arrangement described above and, thus, other nodes and node arrangements may be used which within the scope of the present invention. For example, nodes of a type "company" may be used. The types of nodes employed herein may be definable by the customer.

Any object providing a data source interface may supply data for computations and reports (or any other active element). Contracts, CTNs, and InputSources (described hereinbelow) have a data source interface.

When an active element is executed (typically computations and reports), data from other locations in the consumer tree may be required. The executing element may refer to objects providing an input source interface at the same level, a higher level, or a lower level, in the tree. For example, a report defined within a contract's workset may refer to a meter proxy defined within the same contract and AUX values defined in the containing master account. That report should not refer to meter proxies in other contracts.

Reports that span all the contracts of a consumer should be placed in the consumer's workset. Reports spanning multiple consumers should be placed in the appropriate master account or at the tope node. This restriction helps organize the flow of information within the consumer tree.

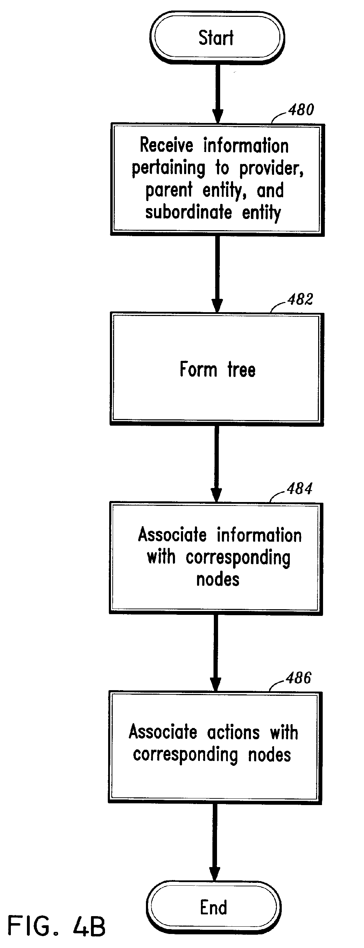

**FIG. 4B** is a flow diagram illustrating a method for associating information pertaining to a meter data acquisition system of a provider of a service or a product according to an illustrative embodiment of the present invention. The method of FIG. 4B corresponds to the construction of the consumer tree.

Information is received corresponding to the provider, at least one parent entity (hereinafter "parent entity") that has at least one subordinate entity (hereinafter "subordinate entity") that receives the service or the product from the provider, and the at least one subordinate entity (step 480).

A consumer tree is formed that includes a root node, at least one branch node (hereinafter "branch node") emanating from the root node, and at least one leaf node (hereinafter "leaf node") emanating from the at least one branch node (step 482). In the tree, the root node corresponds to the provider, the branch node corresponds to the parent entity, and the leaf node corresponds to the subordinate entity.

At least some of the received information corresponding to the provider, the parent entity, and the subordinate entity is associated with the root node, the branch node, and the leaf node, respectively (step 484). Actions relating to the providing of the service or the product are associated with each of the nodes based on the received information associated therewith (step 486).

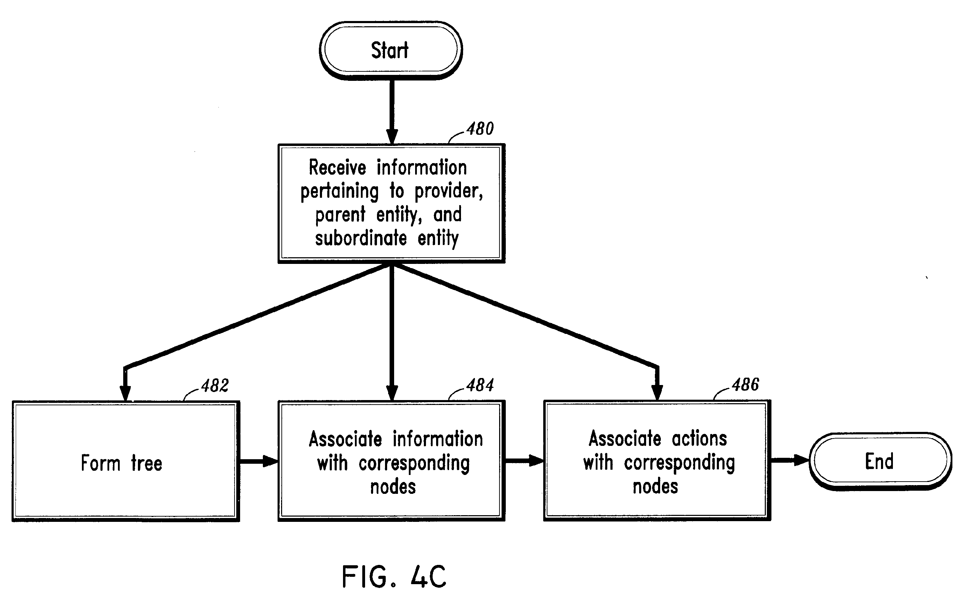

Thus, in the example of FIG. 4B, the nodes of the tree correspond to container elements and the actions associated therewith correspond to active elements. The term "entity" as used herein includes a company, an organization, an individual, a group of individuals, and so forth. Moreover, the term "meter" as used herein refers to any item capable of logging use, consumption, and/or other such variables associated with providing the service or product. It is to be appreciated the "information" received in step 480 may include, at the very least, any information necessary to form the tree (step 482). Moreover, the "information" may include all information necessary to carry out the tasks associated with a meter data acquisition system. For example, the "information" may include contract information, tariff agreement information, meter data, and so forth. Information not immediately necessary for a given task to be performed may be stored until that information is needed for a subsequent task. Moreover, the information may be received over a continuing period, such as meter data being received as it becomes available. This scenario is represented in **FIG. 4C**, which is a flow diagram illustrating an alternate representation of the method of FIG. 4B. Given the teachings of the invention provided herein, one of ordinary skill in the related art will be able to contemplate these and similar implementations of the elements of the present invention.

According to an illustrative embodiment of the present invention, the consumer tree is segmented. Segmentation provides security with respect to the access provided to the nodes of the tree and, hence, the information contained in the nodes.

The purpose of segmentation is to compartmentalize consumer tree data into distinct divisions. Segmentation restricts the accessibility of data to users that are associated with particular segments. Any criteria may be used to define a segment (i.e., product type, location, business type, consumption level, and so forth). The consumer tree facilitates segmentation due to the natural propagation from parent to child of the segment ID, which is a unique identifier that associates a particular user with a particular segment (and hence, one or more nodes).

In a preferred embodiment of the present invention, a node in the consumer tree can only be in one segment. However, it is to be appreciated that the present invention is not limited to having a node be in only one segment and, thus, a node in the consumer tree may be in more than one segment within the scope of the present invention. Moreover, a portion of a single node may be in more than one segment within the scope of the present invention. Given the teachings of the invention provided herein, one of ordinary skill in the related art will be able to contemplate these and similar implementations of the elements of the present invention.

The tree may be segmented based on user-defined or predefined criteria. According to an illustrative embodiment of the present invention, there are two predefined segments, i.e., *unrestricted* and *any*. However, it is to be appreciated that the present invention is not limited to two predefined segments and, thus, any number of predefined segments may be employed within the scope of the present invention.

A node in the any segment may be viewable by anyone. In a preferred embodiment of the present invention, a node in the any segment may be viewed by anyone having an identifier associated with them, even if the identifier does not correspond to the any segment. This prevents the general public (i.e., those without any identifiers) from viewing those nodes, particularly when the consumer tree is accessible through the Internet.

A user can access all the nodes in the tree, if the current data segment is set to unrestricted. In a preferred embodiment of the present invention, the top node is in the unrestricted segment.

A (child) node is in the same segment as its parent. The segment of the child node cannot be changed unless the parent node is the top node or the parent node is in the any segment.

To help organize the segment content, a master account node is typically established for each segment under the top node. Nodes can be moved between segments. When a node is moved, the moved node and its children inherit the segment of the new parent node. In the preferred embodiment, calculation chains that originate in a particular data segment are restricted to nodes within that data segment.

Users may have access to 0 or more segments. At any time, a user is associated with a current segment. Users only have access to (restricted) nodes in the consumer tree that are in their current segment. The user has access to nodes in the any data segment regardless of the current data segment. A user can access all nodes in the tree if the current data segment is set to unrestricted.

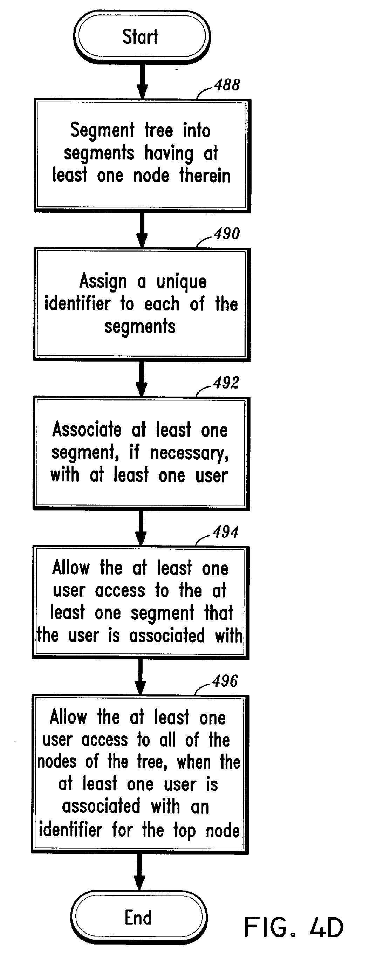

**FIG. 4D** is a flow diagram of a method for segmenting a consumer tree to restrict access thereto according to an illustrative embodiment of the present invention. The method of FIG. 4D may be considered an extension of the methods of FIGs. 4B and 4C.

The tree is segmented into segments having at least one node therein (step 488). A unique identifier is assigned to each of the segments (step 490). At least one segment, if necessary, is associated with at least one user based on the identifier of the at least one segment (step 492). The at least one user is allowed access to only the at least one segment that the user is associated with (step 494). Moreover, the at least one user is allowed access to all of the nodes of the tree, when the at least one user is associated with an identifier that is associated with a segment that comprises the top node (step 496).

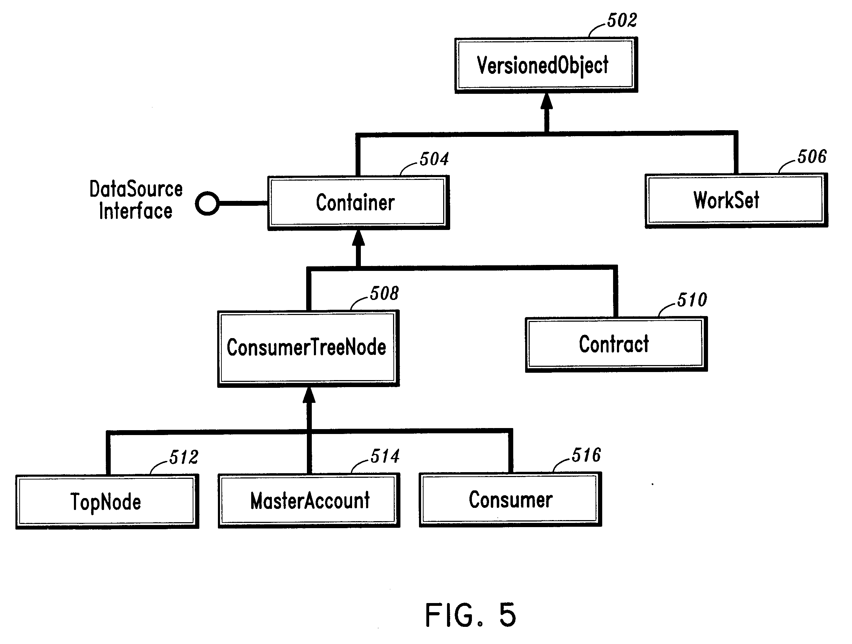

**FIG. 5** is a block diagram illustrating a container class hierarchy according to an illustrative embodiment of the present invention. At the top of the hierarchy is a versioned object 502, followed by a lower level that includes a container 504 and a workset 506. Further lower is a ConsumerTreeNode 508 and a contract 510. Even lower is the top node 512, master account 514, and consumer 516.

Although the configuration of the consumer tree allows for contracts at all levels, the configuration shown in FIG. 4 allows for contracts only at consumer nodes. The user interface may be used to enforce policy such as, for example, only allowing contracts to be associated with consumers.

Contracts contain a workset and a set of attributes. Both consumer tree nodes and contracts contain worksets. The purpose of the workset is to encapsulate functionality common to both types of objects.

Any object supporting a data source interface may provide data for use by computations, reports, or any other active element. Containers and active elements provide attribute information. For example, meter proxies provide data from meter readings, computations provide the results of mathematical computations on data, and master accounts provide lists of consumers.

Each object with a data source interface provides a set of data. For example, one type of meter proxy may supply high tariff and low tariff values. Another type of meter proxy may provide load profiles. When accessing data, a single time or a range of times may be used as an index.

This approach provides a uniform interface for the access of information. New types of objects providing data or using data may be easily added in the future. This approach also allows computations and reports to treat any source of data identically.

The data source interface provides two types of functionality: accessing information and providing a description of all the types of information available.

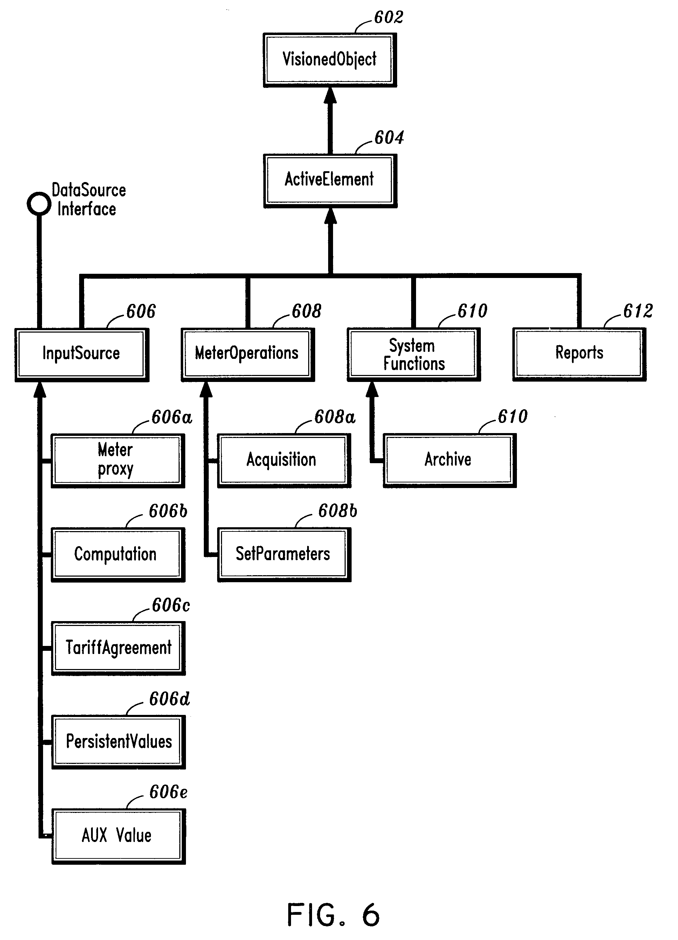

A more detailed description of active elements will now be given. Active elements are objects that encapsulate actions that the system performs or information necessary to perform those actions. Active elements are the objects associated with CTNs and contracts (via a workset) that provide "functionality". Some active elements may be scheduled (e.g., run a report on a specific day). **FIG. 6** is a block diagram illustrating the active element class hierarchy according to an illustrative embodiment of the present invention. At the top of the hierarchy is a versioned object 602, followed by an active element 604. At the level directly beneath active element 604 is an input source 606, meter operations 608, system functions 610, and reports 612.

Input source 606 includes, for example: meter proxy 606a; computation 606b; tariff agreement 606c; persistent values 606d; and AUX value 606e. Meter operations 608 include, for example: acquisition 608a; and set parameters 608b. System functions 610 include, for example, archive 610a.

Each active element contains an "input mapping" that describes which data source interfaces that active element accesses. Input mappings are described in further detail hereinbelow.

Each active element has a name and a unique ID. The name is used as the basis for the interconnections between active elements (described more fully hereinbelow).

Each input source defines an "output mapping" object. The output mapping describes the type of data provided by the input source. The set of data available from an input source (the output mapping) is determined at the time the input source is defined/created. The output mapping object will be used by its data source interface. The data provided by an input source is determined at runtime.

A meter proxy is an interface to meter data. At any given time, a meter proxy is bound to a physical meter. The binding may change over time (e.g., the meter is replaced). The data provided by a meter proxy corresponds to the types of readings generated by a physical meter. Meter proxies provide an interface to meter data collected and stored in online database 216.

A single meter proxy may provide many types of information. Knowledge about meter changes, substitute values, and initial and final readings are encapsulated by a meter proxy. This approach allows computations and reports to access meter data without any concern about the details of the physical devices.

According to a preferred embodiment of the present invention, meter proxies are intended to be "thin" interfaces to meters. That is, if computation is necessary to convert physical device readings into something "more meaningful", then that computation should be done explicitly with a computation object. However, it is to be appreciated that meter proxies may be implemented so as to perform some types of built-in computation, if so desired.

A TariffAgreement represents the tariff information. A TariffAgreement may use/implement daily courses, calendars, and so forth. The data supplied by a TariffAgreement may include (but is not limited to) the number of tariffs, and the tariff in effect at a given time. There are various types of tariffagreements, such as, for example, "time of use", "demand", and a hybrid of the previous two types. A time of use tariffagreement is a tariffagreement in which different charges are applied to the use of a service or product depending on the time of day that the service or product is used. A demand tariffagreement is a tariffagreement in which charges are applied based on the degree of usage of the service or product with respect to prespecified thresholds.

AuxilaryValues contain data used by computations. The functionality of auxiliary values may be provided by TariffAgreements and/or computations. If the definition of an auxiliary value is complex, it should be implemented as a computation.

Computations take data values from DataSources and produce new data. Other computations and reports may then use the resulting data. The definition of a computation includes a description of what data should be used as input to the computation (see InputMapping below) and what output data values are produced.

The computation class fully encapsulates a computation engine. There may be subclasses of computation, which support, but are not limited to, built-in functions, EXCEL, LOTUS and/or dynamically loaded computations.

A PersistentValue is able to store and retrieve data gathered from an InputSource into online database 216 for future use. A typical example would be to save a month's billing determinants for future use. When data is accessed from a PersistentValues object, the object may either retrieve the values from the database or cause the values to be recomputed.

Reporting engine 210 takes data from DataSources and generates some form of output. Reports may generate printed reports, web pages, graphic images, exported data files, mail messages and/or database entries. The type of output to be generated is a run-time parameter. A single report definition may be able to generate many output formats. The output format to be generated is placed in the report's InputMapping.

Output will typically be generated by reports. This includes data exported to the billing system. In a preferred embodiment of the present invention, the only difference between computations and reports is what they do with their results.

Acquisitions represent the collection of data from a meter. Set parameters are used to describe the remote configuration of meters. The function "archive" controls the archiving of information. A scheduled event describes an action to perform on a repeated or one-time basis. A scheduled event refers to: a calendar (when to perform the action), an Active Element (what to perform), and additional information necessary to execute the action.

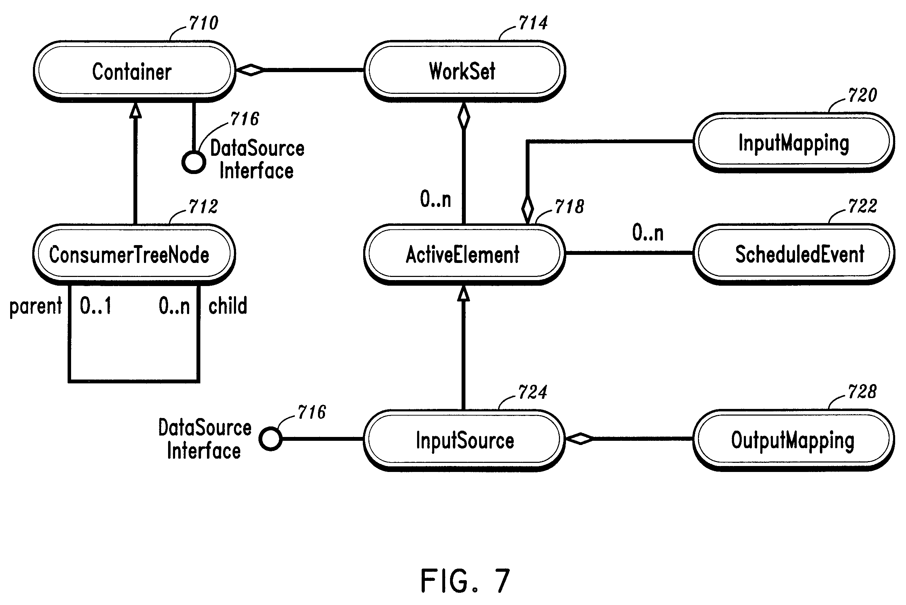

**FIG. 7** is a block diagram summarily illustrating relationships between some of the elements (objects) of the present invention according to an illustrative embodiment thereof. A container 710 is a base class for a consumer tree node 712. A consumer tree node 712 can have 0 or 1 parent, and 0 to m children; this is the basis for the parent-child relationship of the tree structure. In addition, containers 710 have a workset 714 and a data source interface 716. A workset 714 includes 0 to n active elements 718. An active element 718 has an input mapping 720 and is associated with 0 to p scheduled events 722. An input source 724 is a specialization of an active element that has an output mapping 726 and a data source interface 716. Some Active elements (e.g., reports) do not provide output that can be used in a calculation chain. Other active elements (e.g., meter proxy and calculation) can be sources of data for other active elements in a calculation chain.

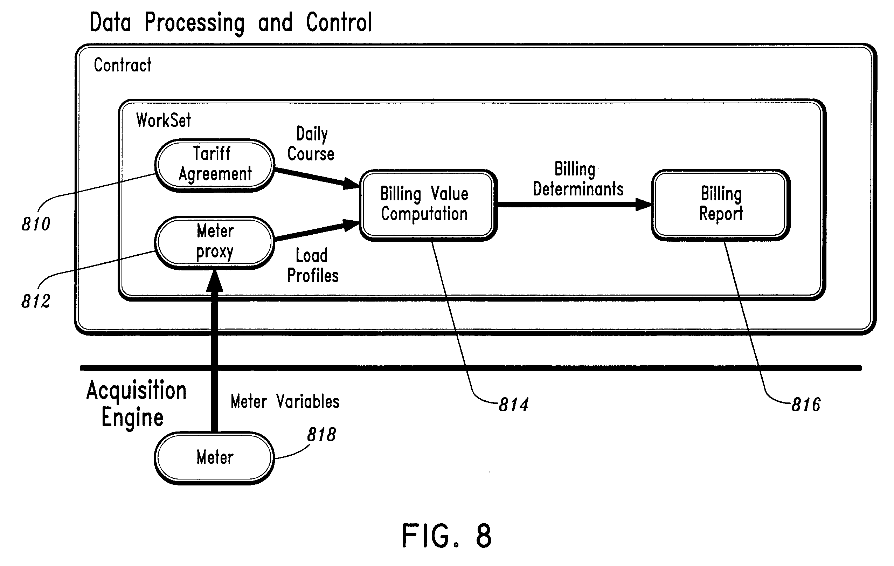

The data processing (e.g., reporting and computation) within a CTN or a contract is controlled by interconnections between active elements. To perform a computation or run a report, the appropriate active elements must be linked together. **FIG. 8** is a diagram illustrating the connection of active elements according to an illustrative embodiment of the present invention.

The active elements in a contract are linked together to run computations and to produce reports. In the example shown in FIG. 8, information from a tariff agreement 810 and a meter proxy 812 are used in a billing value computation 814 to compute billing determinants. The results are used as inputs to a billing report 816. Data values from meters 818 are accessed through meter proxy 812.

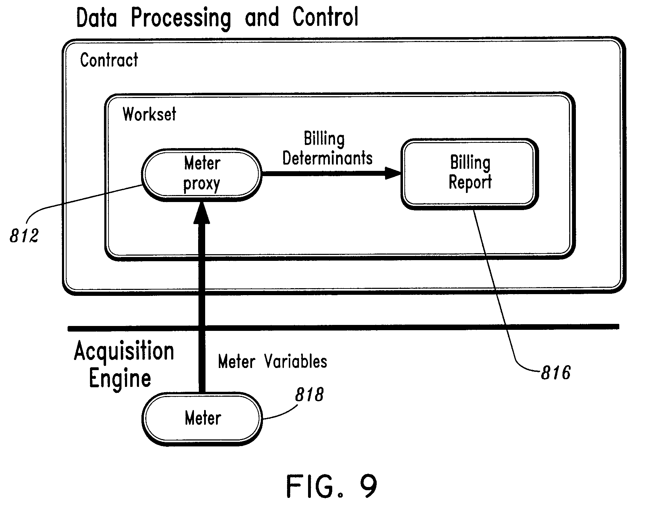

**FIG. 9** is a diagram illustrating the connection of active elements according to another illustrative embodiment of the present invention. In the embodiment of FIG. 9, there is no resultant computation. If the meter 718 produced billing values instead of load profiles, the configuration would be as shown in FIG. 9. In the example of FIG. 9, data values from meter 818 are accessed through meter proxy 812. Meter proxy 812 provides billing determinants to billing report 816. The definition of billing report 816 is unchanged. All that has changed is what is connected to billing report 816.

The definition of a computation or report does not need to include the location from which data is to be received. The definition only specifies the types of data that are required and the name of the object that provides the information. Only information available from a DataSource Interface is needed.

A description of data mappings will now be given according to an illustrative embodiment of the present invention. The interconnections between active elements are specified with DataMapping objects. Each active element that accepts data from another active element has an InputMapping. Each active element that produces data to be used by another active element has an OutputMapping. Thus, by definition, all InputSources have OutputMappings, and all active elements have InputMappings.

The InputMapping specifies a mapping between the data type required by an active element and a data value provided by an active element. For example, suppose the billing value computation requires load profiles from a meter proxy and tariff rates from a tariff agreement. The InputMapping may be represented as shown in TABLE 1.

**TABLE 1**

| InputMapping for Billing Value Computation | |
|---|---|
| Data Type | **Source** |
| LoadProfile | Meter_proxy.load_profile(START TIME, END_TIME) |
| TariffRate | TariffAgreement.rate (START_TIME, END TIME) |

In the example of Table 1, data of the type "load profile" can be obtained by accessing the load profile data value associated with the InputSource named "Meter proxy". Similarly, data of the type "tariff rate" can be obtained by accessing the InputSource named "TariffAgreement". The notation in the source column is described below.

InputMappings refer to InputSources by name, not by a unique ID. When the computation is run, the WorkSet containing the computation is searched for an InputSource with the correct name. Since all InputSources have the same interface, the actual type of the InputSource is irrelevant. Reports and computations treat all input sources identically by this mechanism. The names may be either relative to the active element in the consumer tree or fully qualified.

When the computation is run, there must be a unique input source with the specified name and that input source must be able to supply the specified data. This approach simplifies the addition of new types of input sources in the future.

OutputMappings specify the types of data provided by an InputSource. Suppose the meter proxy generates load profiles and cumulative energy. The meter proxy's OutputMapping would be as shown in TABLE 2.

**TABLE 2**

| Output Mapping for Meter proxy#1 | |
|---|---|
| Data Type | Data Format |
| LoadProfile | Time Dependent Number |
| CumulativeEnergy | Number |

The OutputMapping contains a list of data types produced and their formats. A computation's OutputMapping specifies the results of the computation.

When two active elements are connected, the data type names in the input and output mappings should match. The data access specification (e.g. Meter_proxy.load_profile (START_TIME, END_TIME)) should be compatible with the data type specified in the OutputMapping.

It is the responsibility of the active element's implementation to support data access. In particular, an InputSource should know how to generate the data it provides. The implementation of reports and computations should know how to make the data specified in the input source available to the computation or report engines.

Mapping objects will have methods to support the implementation of active elements. InputSources will provide methods for data retrieval and OutputMappings will provide methods or helper classes for the temporary storage for intermediate results.

An InputSource's OutputMapping is created/defined when the InputSource is created. The OutputMapping may change over time. If an OutputMapping is changed, other InputMappings may be invalidated.

A report or computation's InputMapping is created/defined at object creation time. The InputMapping may change over time. It is allowable for the sources in an InputMapping to be unspecified. The unspecified values may be provided at template instantiation time, report request time or by the scheduler. All values should be specified by the time the report or computation is used.

A description of mapping descriptions will now be given. Mapping Descriptions (MD) are used as the notation within InputMappings to specify the connection from InputMapping to OutputMapping.

A precise syntax of MD is outside the scope of the present invention. However, a syntax for MD should support the following:
(1) String and numeric literals, such as, for example, "123" and "ABCD efgh".
(2) Access to data from an input source within the same WorkSet. For example:
   Meter_proxy.TotalConsumption
   Meter_proxy.LoadProfile(START_TIME, END_TIME)
(3) Access to data in other containers based on relative position in the consumer tree. For example: ../TariffAgreement.Rate(TIME)
(4) Access to data in other WorkSets based on absolute position in the consumer tree. For example: /TopNode/TariffAgreement.Rate(TIME)
(5) Accessed data may be a scalar, vector or array.
(6) Access to several InputSources simultaneously (get the high tariff reading from all meter proxies in the consumer tree). For example:
   {meter_proxy.HighTarif -: meter_proxy <- all meter proxies in consumer tree }

According to a preferred embodiment of the present invention, mapping descriptions do not support computation; MD should only support data access methods. However, in other embodiments, MD may support computation.

Name resolution is used to determine which InputSource a name refers to. For example, to determine which input source "meter_proxy" refers to in the expression "meter_proxy.TotalConsumption", the system will search for a unique input source named "meter_proxy" defined in the same WorkSet as the InputMapping. If a name is not found in the appropriate WorkSet, an error will occur. In a preferred embodiment of the present invention, names are resolved by inheritance through the consumer tree.

Input and output mappings may also contain information specific to the active element type. For example, the input mapping for an EXCEL computation may contain information about where to place the data in the worksheet.

The interconnections between active elements may be tested for consistency and correctness by analyzing input and output mappings. The analysis should not require knowledge about the types of active elements.

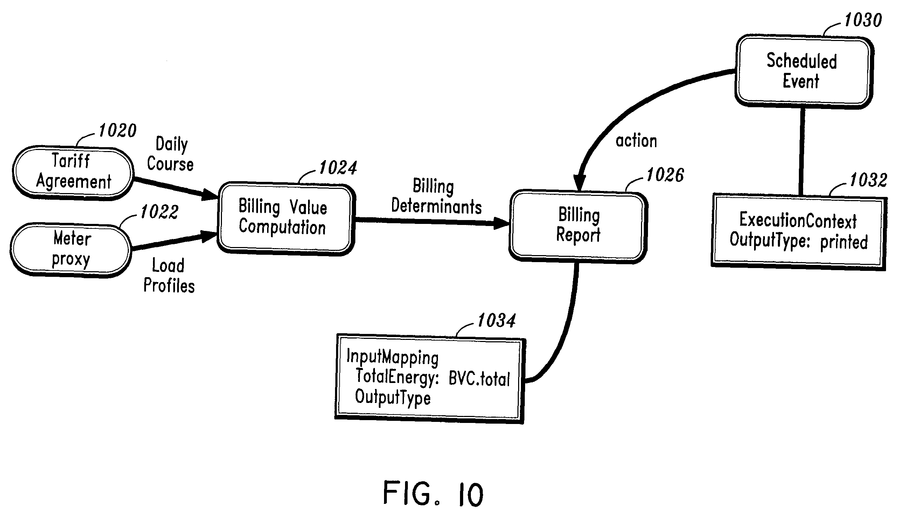

A description of the execution of active elements will now be given. **FIG. 10** is a block diagram illustrating an execution triggered by a scheduled event according to an illustrative embodiment of the present invention. In this example, a computation chain is depicted as a series of interconnected active elements (i.e., a tariffagreement 1020, a meter proxy 1022, a computation 1024 (billing value computation), and a report 1026 (billing report)). The example illustrates that a scheduled event 1030 is related to the production of the billing report 1026. The scheduled event 1030 not only determines when events should be executed, but it also provides input data to the computation chain. In this example, the scheduled event 1030 determines the elements of the execution context 1032 and defines the output type as "printed". The input mapping 1034 of the report 1026 refers to the output of the billing value computation 1024. It is to be noted that an execution may also be triggered from the user interface.

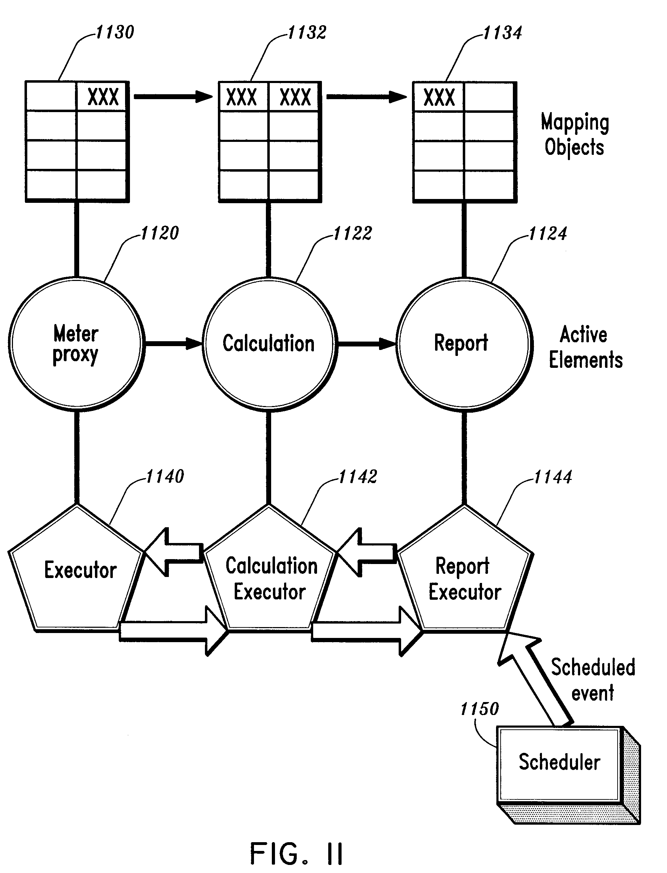

**FIG. 11** is a diagram illustrating the execution of a calculation chain (a sequence of active elements) according to an illustrative embodiment of the present invention. The chain consists of the following three active elements: a meter proxy 1120; a calculation 1122; and a report 1124. Each of these active elements is associated with a mapping object and an executor.

Data is transferred between active elements through their mapping objects, as shown by the arrows disposed between the mapping objects. The example illustrates the composition of mapping object data produced and used by the active elements in the chain. For example, the meter proxy 1120 produces data which should "map" to the inputs of the calculation mapping object 1132. Next, the calculation active element 1122 produces data which should "map" to the inputs of the report mapping object 1134.

The same data transfer can also be illustrated using arrows between the active elements. For example, the meter proxy 1120 produces data that is used by the calculation 1122 and the calculation 1122 produces data that is used by the report 1124.

Again, the same data transfer is illustrated at the executor level, which also illustrates a scheduled event from the scheduler. The scheduled event causes the report executor 1144 to activate other active element executors in the calculation chain. The executor of each active element is cognizant of how to execute its active element. The arrow from the scheduler 1150 to the report executor 1144 illustrates the transfer of scheduled event data to the report executor 1144 that causes it to "execute" the report. However, to successfully execute the report, other information is required. Accordingly, information is passed down the calculation chain through the active element executors. Once an executor has all of the information it needs to execute its corresponding active element, that executor executes the active element. After the lower active element executes, the produced data is passed to the next active element executor (1142) in the chain and so on (1140) until the end of the chain is reached.

In further detail, the following actions occur when the execution of an active element (e.g., report, acquisition, and so forth) is initiated:
(1) For either scheduled or interactive tasks, a ScheduledEvent is created and added to the appropriate WorkSet. An execution context is created and may be partially filled. It is necessary to initiate interactive tasks in this fashion because the ScheduledEvent object is required to specify needed run-time parameters.
(2) At the appropriate time (based on the event's calendar), the Scheduler executes the event.
(3) The execution context is copied and completed.
(4) The "execute" method of the active element is invoked passing the execution context as an argument.
(5) The copy of the execution context is destroyed (or possibly saved for logging purposes).

The procedure for the execution of an active element according to an illustrative embodiment of the present invention is as follows:
(1) Evaluate the MD notation in the InputMapping. This may, in turn, execute another active element (which should be an InputSource). In such a case, the same execution context is used. In the illustrative embodiment, MD notation in the execution context overrides MD notation in the InputMapping. In other embodiments of the present invention, the alternative may be implemented (i.e., MD notation in the InputMapping overrides MD notation in the execution context).
(2) Perform the operation.
(3) For InputSources, make the data available through the OutputMappings of the InputSources.

A description of execution context will now be given. The execution context is an object containing information that may be used by *all* active elements in an "execution chain" (i.e., a sequence of connected active elements). Typically, the execution context contains information about time (current time, data start time, data end time, and version information) and several built-in variables. When the execution context is completed (just before it is used), the built-in variables are automatically set by the system. The execution context is an object that also contains an InputMapping in which the entire corresponding MD code refers to literal values (no connections to other input sources).

During execution, the values in the execution context override the values in an active element's InputMapping. When a scheduled event is created, the input chain (all active elements which are connected directly or indirectly) is examined to determine what data is not specified in the InputMappings. Fields for that data are added to the execution context. The user should then supply any values that cannot be automatically supplied by the system. The execution context may be used by an InputSource to store intermediate results.

The execution context contains all the dynamic information required to execute active elements. In particular, it stores intermediate results and tracks the work as it is done.

The execution context contains a special type of InputMapping that is used during execution (described in further detail hereinbelow). When the ScheduledEvent is executed, the execution context is used in conjunction with the active element's InputMapping. This allows the ScheduledEvent to complete the InputMapping of an active element, if necessary. For example, in the example above we see that the InputMapping of the report does not specify a value for the OutputType. When the report event is executed, its execution context supplies the missing values.

With respect to calculation engine 214, a spread sheet program (SSP) may be used to perform all of the required computations. The SSP is used as follows: a workbook is loaded into the SSP, data is placed in the appropriate locations in the workbook, computations are run, and data is read from the SSP. Spreadsheets will not access the database directly.

A separate object will be implemented which is responsible for implementing the above procedure. This object (presumably a subclass of Computation named SSP Computation) will place and retrieve data to/from the SSP as necessary. Workbooks used to implement SSP computations should have a certain structure. There must be worksheets for: data input, data output, and variable descriptions.

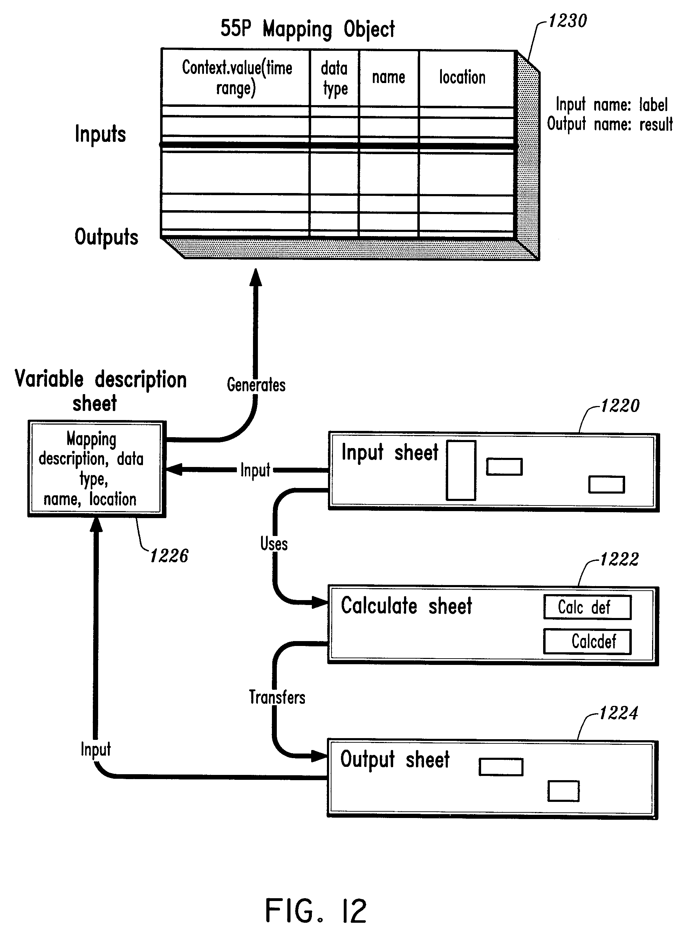

FIG. 12 is a block diagram illustrating the relation between a mapping object and a spread sheet calculation according to an illustrative embodiment of the present invention. In this example, the spread sheet calculation is implemented using an Excel workbook (not shown) containing four Excel worksheets. The four worksheets are the input sheet 1220, the calculation sheet 1222, the output sheet 1224, and the variable description sheet 1226. Note that there is no limitation imposed by system 200 on the number of worksheets.

The input sheet 1220 describes the input variables to the calculation (not shown). When the calculation is executed, data is placed into the input sheet 1220 for ease of use. The input sheet 1220 may contain functions for extracting data out of the mapping object 1230 (SSP mapping object). The calculation sheet 1222 actually does the calculation on the data. The calculation sheet 1222 describes the mathematical formula (calculation definitions) of the calculation. The calculation sheet 1222 uses data from the input sheet 1220 and transfers results to the output sheet 1224. The variable description sheet 1226 is determined based on the information from the input sheet 1220 and the output sheet 1224. The variable description sheet 1226 contains the information required to generate the mapping object 1230. This assures data integrity between the output mapping and the worksheets (not shown).

In further detail, the variable description sheet 1226:
(1) describes what data type is required for the computation and where to place the data in the input sheet 1220;
(2) defines the outputs of the computation and where they are stored in the output sheet 1224; and
(3) is used to create an SSPInputMapping and an SSPOutputMapping.

These objects are specializations of Input/OutputMapping, which contain SSP specific information. In particular, they specify the locations in the worksheet to place the data and from where to read the output.

A description of versioning according to an illustrative embodiment of the present invention will now be given. A versioned object is an object that can change over time, yet still reproduces states from its past. For example, we should be able to change the definition of a computation and still access the old definition.

Each versioned object presents two views of itself: a time-dependent view and a time-independent view. The time-dependent view is a snapshot of the state of the object at a given time (past or present). The time independent view represents the object over all time.

The time-dependent view allows for the creation of new versions of the object and other version control (or CM-like) operations. The time-dependent view does not provide access to any data that may change over time (unless the access method accepts time as a parameter). A checkout/checkin procedure is used to make changes to versioned objects.

A description of active element templates according to an embodiment of the present invention will now be given. It is to be appreciated that many elements can be instantiated from a predefined template. Templates can be created from scratch or can be copied from other templates, edited, and saved as a new template. Templates should first be "registered" to become available for instantiation. Registered means that the template is ready for use by its creator (or someone else) for the purposes of, for example, test and evaluation. However, the registered template is not yet available for general use. To become available for general use, the registered template must be "published", which simply means that the template has been earmarked as accessible for general use.

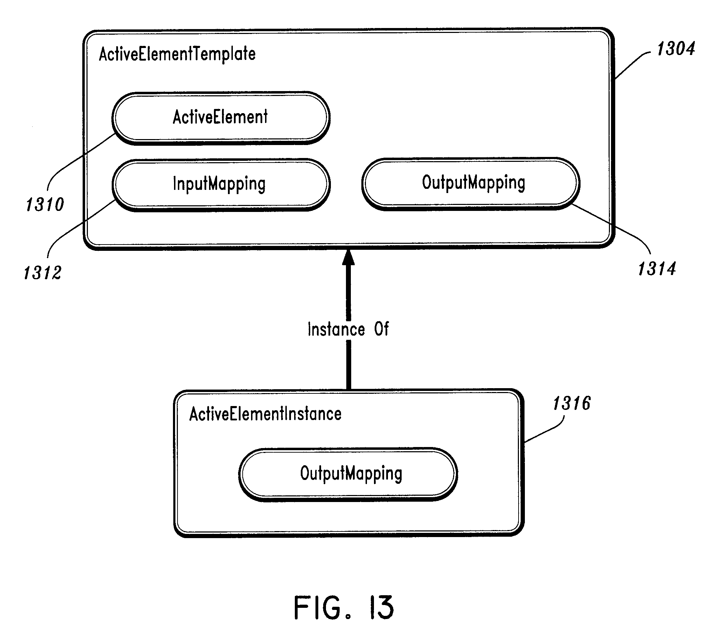

It is to be appreciated that templates can be made for all active elements. **FIG. 13** is a block diagram of an active element template 1304 according to an illustrative embodiment of the present invention. The template 1304 contains an active element 1310, an InputMapping 1312, and an optional OutputMapping 1314. Instances 1316 of active elements may override the input mapping defined in the template; that is, active element instances may only override the MD defined in the template's input mapping.

To define an active element template, the following procedure is followed:
(1) The active element and mapping objects are created.
(2) A template object is created and registered with the system.

The creation of the active element and mapping objects is specialized for each type of active element. For example, the procedure for creating spread sheet program (e.g., EXCEL) computation templates would be:
(1) Use the SSP to create a properly structured workbook.
(2) Execute a "create SSP computation command".
(3) Create input and output mappings by examining the workbook.

Templates are versioned objects. Changes to the active element in the template are automatically reflected in the instances. Changes to the mappings in the template are automatically reflected in the instances if no local changes have been made.

A description of container templates according to an illustrative embodiment of the present invention will now be given. A container is analogous to a directory and an active element is analogous to a file within a directory. The main purpose of a container template is to allow the user to easily create an instance of the container, its active elements, and its sub-containers. The following description describes how container templates are created and how instances of containers are made from a template.

Container templates contain active elements and possibly other container templates. The author of the container template describes how the active elements within the container are connected and what is the required information needed for instantiating the container and its active elements. The active elements, which are also specified using templates, should be instantiated during the creation of the container template because the container should describe how the active elements are connected to each other. When the instance of the container is created, the instances of the active elements will be copied and modified as necessary. This allows the author of the container template to describe the relationship among the active elements in the container and allow the user to add in details during or after instantiation of the container.

A well designed set of container and active element templates provides enough information to make instantiation of the objects as easy as possible for the user. For example, it should be possible to write a consumer template for customers with only one meter where the only required information at instantiation is the meter ID. All details about the contract and reports will come from the consumer, the contract, and their active element templates.

All templates should be registered before they can be used. As part of template creation, the list of attributes associated with the object should indicate the fields that are required or optional. The author may specify default values for any field.

Note that the user has the option of making changes to the objects during or after instantiation. The user may change the attributes as he or she sees fit.

A description of scheduling according to three illustrative embodiments of the present invention will now be given. The scheduling of tasks is a major function within the application. The schedule will be dynamically constructed daily based upon scheduled events and the status of previously scheduled events.

Daily schedules are run once and never run again. Each daily schedule could be archived for later referral. Building a daily schedule requires looking at each scheduled event in the consumer tree to determine if that scheduled event should be done that day. The consumer tree will be traversed to determine what events should be done. The Schedule Maker will traverse the consumer tree to determine the events that should occur and perform optimization of the schedule, if possible.

Restart and error handling are done through the Progress Monitor. As each scheduled task is completed, the progress monitor will track its completion and status. As part of scheduling events for the next day, the Schedule Maker will search the progress monitor log to see if the previous scheduled events completed successfully. If not, then they will be scheduled again.

There are a number of progressively more sophisticated techniques that can be incorporated into the scheduling system. These are described hereinbelow.

A description of scheduling according to the first illustrative embodiment of the present invention will now be given. The first goal of the scheduler is to allow the scheduling of all data acquisition before any calculations and reports. This method assumes that data acquisition is completed by a certain time, then calculations based on the acquired data occur.

Building a schedule is a recurring event that is a scheduled system operation. To build a schedule, the consumer tree is traversed to determine which scheduled events must execute today. The schedule maker analyses the scheduled events and optimizes the acquisition schedule. Those events still pending are also considered and integrated into the acquisition schedule. At this point, the schedule is built from the bottom up - this assumes that lower reports do not depend upon the results of higher calculations. The schedule maker then adds the reports and other scheduled events after each scheduled task has been assigned a unique transaction ID. When the schedule is complete, the scheduler maker transmits the new schedule to the scheduler.

A description of scheduling according to the second illustrative embodiment of the present invention will now be given. Scheduling according to the second embodiment allows for interleaving of data acquisition and report generation. This allows for reports to begin creation soon after all of the data needed for a report has been acquired. Scheduling according to the second embodiment requires "triggers" to indicate that acquisition is complete. The Progress Monitor could be used for such a situation.

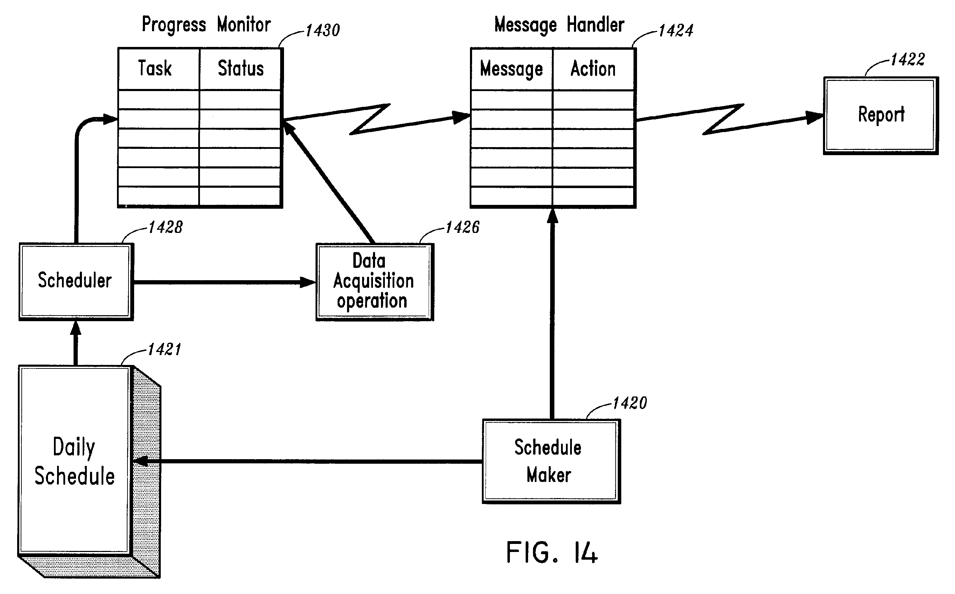

**FIG. 14** is a diagram illustrating how the execution of a report may be triggered immediately after the data from a meter has been acquired according to an illustrative embodiment of the present invention. When the schedule maker 1420 generates the daily schedule 1421, it can determine if a report 1422 can be triggered immediately after the data from the meter has been acquired. To allow this to occur, a message/action is added to the message handler 1424. A message/action is basically a trigger, i.e., when this message occurs, perform the action. In this case the message describes the completion of a data acquisition operation 1426 from the meter and the action is to run the report 1422.

The scheduler 1428 is responsible for starting the execution of data acquisition operations. The scheduler 1428 reads and performs the daily schedule, which describes when and what data acquisition operations to perform. To perform the data acquisition operation 1426, the scheduler 1428 will first note the task to the progress monitor 1430 and then tell the data acquisition operation 1426 to perform the task (contact the meter and get the data). The data acquisition operation 1426 will inform the progress monitor 1430 about the status of the task. The progress monitor 1430 will announce the status of the task by sending messages. When the status of the task is complete, the message handler 1424 will recognize the message and perform the action; in this case, run the report 1422.

A description of scheduling according to the third illustrative embodiment of the present invention will now be given. In this more advanced stage, the schedules will allow for bottom-up scheduling or top-down scheduling. In top-down scheduling, acquisitions might not be specified; rather the generation of a report could cause an acquisition to occur. In bottom up scheduling, the acquisition could cause all of the reports to occur.

It is to be appreciated that instead of scheduling acquisitions, one can schedule reports. In such a case, the demand for data, which is driven by the reports, results in a schedule being developed which would have to be optimized as well, and then the acquisitions could happen and once they occur the dependencies on the data are satisfied and then the calculation chain could proceed and ultimately result in the report being completed.

Although the illustrative embodiments have been described herein with reference to the accompanying drawings, it is to be understood that the present system and method is not limited to those precise embodiments, and that various other changes and modifications may be affected therein by one skilled in the art without departing from the scope of the invention. All such changes and modifications are intended to be included within the scope of the invention as defined by the appended claims.

## Claims

1. A method for associating information pertaining to a meter data acquisition system of a provider of one of a service and a product, comprising the steps of:
receiving information corresponding to the provider and at least one entity that receives one of the service and the product from the provider;
forming a tree comprised of a root node (402) and at least one leaf node (406) emanating from the root node, the root node corresponding to the provider and the at least one leaf node corresponding to the at least one entity;
associating at least some of the received information corresponding to the provider and the at least one entity with the root node (402) and the at least one leaf node (406), respectively; and
associating actions relating to the providing of one of the service and the product with each of the nodes based on the received information associated therewith.

2. A method for associating information pertaining to a meter data acquisition system of a provider of one of a service and a product, comprising the steps of:
receiving information corresponding to the provider, at least one parent entity that has at least one subordinate entity that receives one of the service and the product from the provider, and the at least one subordinate entity;
forming a tree comprised of a root node (402), at least one branch node (404) emanating from the root node, and at least one leaf node (406) emanating from the at least one branch node, the root node corresponding to the provider, the at least one branch node corresponding to the at least one parent entity, and the at least one leaf node corresponding to the at least one subordinate entity;
associating at least some of the received information corresponding to the provider, the at least one parent entity, and the at least one subordinate entity with the root node, the at least one branch node, and the at least one leaf node, respectively; and
associating actions relating to the providing of one of the service and the product with each of the nodes based on the received information associated therewith.

3. A method according to claim 2, wherein the at least one parent entity receives one of the service and the product from the provider.

4. A method according to claim 2 or 3, wherein at least one of the at least one branch node (404) and the at least one leaf node (406) is associated with at least one contract pertaining to one of the service and the product provided by the provider.

5. A method according to claim 2, 3 or 4, further comprising the step of instantiating at least one of the root node (402), the at least one branch node (404), and the at least one leaf node (406) based on predefined templates.

6. A method according to claim 5, further comprising the step of modifying a given predefined template to propagate changes to at least portions of any of the root node (402), the at least one branch node (404), and the at least one leaf node (406) instantiated therefrom.

7. A method according to any of the preceding claims, further comprising the step of restricting access to a given node in the tree, based on a position of the given node in the tree.

8. A method according to any of claims 2 to 7, further comprising the step of modifying at least one of the at least one branch node (404) and the at least one leaf node (406), based on a checkout/checkin paradigm.

9. A method according to any of claims 2 to 8, wherein at least one of the at least one branch node (404) and the at least one leaf node (406) is associated with reports that specify billing to be paid to the provider for providing one of the service and the product.

10. A method according to any of claims 2 to 9, further comprising the step of generating an input mapping for a given action that associates a data source interface accessed by the given action with a data type compatible with the given action.

11. A method according to claim 10, further comprising the step of generating an output mapping for a given action that associates the data type compatible with the given action with a data format.

12. A method according to claim 11, further comprising the step of interconnecting some of the actions associated with any of the nodes to form a sequence of actions necessary to accomplish a given task.

13. A method according to claim 12, wherein said connecting step further comprises the step of determining whether the data types in the input and the output mappings are identical.

14. A method according to claim 12, wherein said given task comprises generating a billing report and preferably generating intermediate values for a billing report.

15. A method according to any of the preceding claims, further comprising the step of maintaining a history of a prior state of a given node, when the given node has been modified.

16. A method according to claim any of the preceding claims, further comprising the step of maintaining a history of a prior state of a given action corresponding to a given node, when the given action has been modified.

17. A method according to claim 15 or 16, wherein the history is one of time-dependent and time-independent, the time-dependent history corresponding to a state of the given action at a given time, the time-independent history corresponding to the given action over all time.

18. A method according to any of the preceding claims, wherein an execution of an action associated with a given node refers to at least one of information and actions associated with one of a higher level, a same level, and a lower level in the tree.

19. A method according to any of the preceding claims, further comprising the step of scheduling an execution of a given action prior to an acquisition of data required therefor; or scheduling an execution of a given action as data required therefor becomes available.

20. A method according to any of the preceding claims, further comprising the step of re-scheduling an execution of at least a portion of a given action, when the given action has not been completely executed in accordance with a predetermined schedule.

21. A method according to any of claims 2 to 20, wherein the information corresponding to at least one of the provider, the parent entity, and the subordinate entity includes a tariff agreement.

22. A method according to any of the preceding claims, wherein said method is implemented as an object-oriented program.

23. A program storage device readable by machine, tangibly embodying a program of instructions executable by the machine to perform steps for associating information pertaining to a meter data acquisition system of a provider of one of a service and a product, said method steps comprising:
receiving information corresponding to the provider, at least one parent entity that has at least one subordinate entity that receives one of the service and the product from the provider, and the at least one subordinate entity;
forming a tree comprised of a root node (402), at least one branch node (404) emanating from the root node (406), and at least one leaf node emanating from the at least one branch node, the root node corresponding to the provider, the at least one branch node corresponding to the at least one parent entity, and the at least one leaf node corresponding to the at least one subordinate entity;
associating at least some of the received information corresponding to the provider, the at least one parent entity, and the at least one subordinate entity with the root node, the at least one branch node, and the at least one leaf node, respectively; and
associating actions relating to the providing of one of the service and the product with each of the nodes based on the received information associated therewith.

24. A program storage device according to claim 23, further comprising means for generating an input mapping for a given action that associates a data source interface accessed by the given action with a data type compatible with the given action and preferably further comprising means for generating an output mapping for a given action that associates the data type compatible with the given action with a data format.

25. A program storage device according to claim 24, further comprising means for interconnecting some of the actions associated with any of the nodes to form a sequence of actions necessary to accomplish a given task; wherein said connecting step preferably further comprises means for determining whether the data types in the input and the output mappings are identical.

26. A method or program storage device according to any of the preceding claims, further comprising the steps of or means for:
segmenting the tree into segments having at least one node therein;
assigning a unique identifier to each of the segments;
associating at least one segment, if necessary, with at least one user based on the identifier of the at least one segment; and
allowing the at least one user access to the at least one segment that the user is associated with.

27. A method or program storage device according to claim 26, wherein said segmenting performed in said segmenting step is based on at least one of user defined and predefined criteria.

28. A method or program storage device according to claim 27, wherein said predefined criteria comprise providing one of unrestricted and restricted access to one of all of the nodes in the tree and all of the nodes in a given segment.

29. A method or program storage device according to any of claims 26 to 28, further comprising the step of or means for allowing the at least one user access to all of the nodes of the tree, when the at least one user is associated with an identifier that is associated with a segment that comprises the top node.

30. A method or program storage device according to any of claims 26 to 29, wherein two consecutive nodes in the tree occurring along a same path and in a descending order have a parent node child node relation, respectively.

31. A method or program storage device according to claim 30, wherein said segmenting step is performed so as to comprise all child nodes of a given parent node in a same segment as the given parent node.

32. A method or program storage device according to claims 30 or 31, further comprising the step of or means for grouping a first node and child nodes of the first node in a same segment as a second node, when the first node is moved so as to become a child node of the second node.
